# EUROPEAN PATENT APPLICATION

(11) **EP 3 261 039 A1**
(43) Date of publication of application: **27.12.2017**
(21) Application number: 17176703.1
(22) Date of filing: 19.06.2017
(51) Int. Cl.: G06Q 20/32, G06Q 20/36

(54) **PAYMENT SWITCHING METHOD AND DEVICE**

(30) Priority: 22.06.2016 WO PCT/CN2016/086692
(71) Applicant: Beijing Xiaomi Mobile Software Co., Ltd., Beijing 100085 (CN)
(72) Inventor: ZHANG, Xu, Beijing, 100085 (CN); CHENG, Yu, Beijing, 100085 (CN); LIU, Jing, Beijing, 100085 (CN)
(74) Representative: Kudlek, Franz Thomas

(57) **Abstract**

The present disclosure provides a payment switching method and a device, which belong to the field of terminal technology. The method includes: displaying a displaying interface of virtual cards if receiving an interface displaying instruction, in which the displaying interface of the virtual cards includes at least two payment modes; determining a target payment mode corresponding to an operation for switching the payment mode if detecting the operation; and performing a payment based on the target payment mode. In embodiments of the present disclosure, by providing the displaying interface of the virtual cards, an operation access for rapidly switching the payment modes is provided for a user, thereby largely shortening an operating path.

## Description

### TECHNICAL FIELD

The present disclosure generally relates to the field of terminal technology, and more particularly, to a payment switching method and a payment switching device.

### BACKGROUND

With the development of terminal technology, mobile payment technology has been a more and more acceptable means. At present, the mobile payment technology is divided into two types based on the payment business level. A first type is a third party payment, of which a clearing institution subject is mainly a third party payment company. The third party payment takes the third party payment company as an intermedium to perform a payment with banks. A second type is a flash-payment based on NFC, of which the clearing institution subject is mainly a Unionpay organization. The flash-payment based on NFC takes the Unionpay organization as an intermedium to perform a payment with banks. No matter which type is used, the payment is significantly simplified, thereby ensuring safety of funds as physical cards and cashes are replaced.

### SUMMARY

According to a first aspect, there is provided a payment switching method. The method includes:
displaying a displaying interface of virtual cards if receiving an interface displaying instruction by a first terminal, in which the displaying interface of the virtual cards includes at least two payment modes;
determining a target payment mode from the at least two payment modes according to a payment switching operation if detecting the payment switching operation; and
performing a payment based on the target payment mode.

In embodiments of the present disclosure, by providing the displaying interface of the virtual cards, an operation access for rapidly switching the payment modes is provided for a user, thereby largely shortening an operating path.

In a possible implementation, the interface displaying instruction is triggered if a designated operation on a hardware component of the first terminal is detected under a state that a screen of the first terminal is locked; or, the interface displaying instruction is triggered if a device of a designated type is detected by a NFC module of the first terminal within a preset distance; or, the interface displaying instruction is triggered if an operation for triggering a shortcut icon is detected, in which the shortcut icon is configured to activate the displaying interface of the virtual cards.

In a possible implementation, the designated operation on the hardware component of the first terminal includes at least one of:
a clicking operation, consecutively clicking operations or a long pressing operation on a preset physical button of the first terminal;
a preset operation on the screen of the first terminal; and
a preset operation on a fingerprint identifying module of the first terminal.

In a possible implementation, the displaying interface of the virtual cards includes a first list of the virtual cards supporting a first payment mode if the first payment mode is selected, and the virtual cards representing virtual bank cards supporting the first payment mode.

In a possible implementation, the displaying interface of the virtual cards includes a second list of the virtual cards supporting a second payment mode if the second payment mode is selected, and the virtual cards representing account information supporting the second payment mode.

In a possible implementation, the payment switching operation is a swiping operation on the displaying interface of the virtual cards to the right or to the left; or
the payment switching operation is a triggering operation on any one of lists on the displaying interface of the virtual cards.

In a possible implementation, if the target payment mode is the second payment mode, performing a payment based on the target payment mode includes:
displaying a payment graphic logo if receiving a first payment instruction, scanning the payment graphic logo by a second terminal to finish the payment, in which the payment graphic logo is configured to indicate account information supporting the second payment mode; or
scanning a receiving graphic logo and acquiring receiving account information to finish the payment according to account information supporting the second payment mode and the receiving account information; or
reading payment account information from a designated storage region if receiving a second payment instruction and sending the payment account information to a second terminal by a NFC module of the first terminal to finish the payment, in which the payment account information is generated by a server according to account information supporting the second payment mode.

In a possible implementation, the method further includes:
generating lists of the virtual cards corresponding to the at least two payment modes respectively;
accordingly, performing a payment based on the target payment mode includes:
   displaying a list of the virtual cards supporting the target payment mode and performing the payment according to the list.

According to a second aspect, there is provided a payment switching device. The device includes:
a displaying module, configured to display a displaying interface of virtual cards if receiving an interface displaying instruction by a first terminal, in which the displaying interface of the virtual cards includes at least two payment modes;
a determining module, configured to determine a target payment mode from the at least two payment modes according to a payment switching operation if detecting the payment switching operation; and
a paying module, configured to perform a payment based on the target payment mode.

In a possible implementation, the device further includes a first triggering module, configured to trigger the interface displaying instruction if detecting a designated operation on a hardware component of the first terminal under a state that a screen of the first terminal is locked.

In a possible implementation, the device further includes a second triggering module, configured to trigger the interface displaying instruction if detecting a device of a designated type by a NFC module of the first terminal within a preset distance.

In a possible implementation, the device further includes a third triggering module, configured to trigger the interface displaying instruction if detecting an operation for triggering a shortcut icon, in which the shortcut icon is configured to activate the displaying interface of the virtual cards.

In a possible implementation, the designated operation on the hardware component of the first terminal includes at least one of: a clicking operation, consecutively clicking operations or a long pressing operation on a preset physical button of the first terminal; a preset operation on the screen of the first terminal; and a preset operation on a fingerprint identifying module of the first terminal.

In a possible implementation, the displaying interface of the virtual cards includes a first list of the virtual cards supporting a first payment mode if the first payment mode is selected, and the virtual cards representing bank cards supporting the first payment mode.

In a possible implementation, the displaying interface of the virtual cards includes a second list of the virtual cards supporting a second payment mode if the second payment mode is selected, and the virtual cards representing account information supporting the second payment mode.

In a possible implementation, the payment switching operation is a swiping operation on the displaying interface of the virtual cards to the right or to the left; or
the payment switching operation is a triggering operation on any one of lists on the displaying interface of the virtual cards.

In a possible implementation, the paying module is configured to:
display a payment graphic logo if receiving a first payment instruction, scan the payment graphic logo by a second terminal to finish the payment, in which the payment graphic logo is configured to indicate account information supporting the second payment mode; or to scan a receiving graphic logo and acquire receiving account information to finish the payment according to account information supporting the second payment mode and the receiving account information; or to read payment account information from a designated storage region if receiving a second payment instruction and send the payment account information to a second terminal by a NFC module of the first terminal to finish the payment, in which the payment account information is generated by a server according to account information supporting the second payment mode.

In a possible implementation, the device further includes:
a list generating module, configured to generate lists of the virtual cards corresponding to the at least two payment modes respectively;
in which the paying module is further configured to display a list of the virtual cards supporting the target payment mode and to perform the payment according to the list.

According to a third aspect, there is provided a device for switching a payment mode. The device includes:
a processor; and
a memory configured to store an instruction executable by the processor;
in which the processor is configured to:
   display a displaying interface of virtual cards if receiving an interface displaying instruction by a first terminal, in which the displaying interface of the virtual cards includes at least two payment modes;
   determine a target payment mode from the at least two payment modes according to a payment switching operation if detecting the payment switching operation; and
   perform a payment based on the target payment mode.

In embodiments of the present disclosure, by providing the displaying interface of the virtual cards, an operation access for rapidly switching the payment modes is provided for a user, thereby largely shortening an operating path.

According to a fourth aspect, there is provided a computer-readable storage medium. The computer-readable storage medium has stored therein instructions that, when executed by a processor of a device, causes the device to perform the payment switching method according to the first aspect of embodiments of the present disclosure.

It is to be understood that, both the foregoing general description and the following detailed description are exemplary and explanatory only and are not restrictive of the present disclosure.

### BRIEF DESCRIPTION OF THE DRAWINGS

The accompanying drawings herein are incorporated in and become parts of the specification, illustrate embodiments consistent with the disclosure and, together with the description, serve to explain the principles of the disclosure.
Fig. 1 is a flow chart showing a payment switching method according to an exemplary embodiment;
Fig. 2 is a flow chart showing a payment switching method according to an exemplary embodiment;
Fig. 3 is a schematic diagram illustrating a displaying interface of virtual cards according to an exemplary embodiment;
Fig. 4 is a block diagram of a payment switching device according to an exemplary embodiment;
Fig. 5 is a block diagram of a device 500 for switching a payment mode according to an exemplary embodiment.

### DETAILED DESCRIPTION

In order to make purposes, technical solutions and advantages of the present disclosure more clear, implementations of embodiments of the present disclosure will now be described in detail by combining with the accompanying drawings. Herein, the illustrative embodiments of the present disclosure and description thereof are intended to explain the present disclosure, but are not intended to limit the present disclosure.

Payment modes in embodiments of the present disclosure include a first payment mode and a second payment mode. The first payment mode may be a flash-payment based on NFC (Near Field Communication). The second payment mode may be a third party payment mode. Both of the payment modes may be provided by a payment application. The payment modes will be described below.

With the flash-payment based on NFC, by performing an interaction between a NFC module on a paying terminal and a NFC module on a receiving terminal, an interaction on payment information is performed between the terminals such that an interaction on data is performed between the receiving terminal and a backstage supporter (for example, a Unionpay server or a bank server), thereby realizing the payment from the paying terminal to the receiving terminal.

With the third party payment mode, by providing a payment account by a third party payment institution with a payment license, and by binding bank cards within the payment account or recharging to the payment account via the user, an interaction on a receiving account and/or a paying account is performed between the receiving terminal and the paying terminal by scanning a 2D barcode during a process of paying, thereby realizing the payment from the paying account to the receiving account.

It is to be illustrated that, the third party is merely understood to distinguish from the bank or the user, and has no other meanings. A provider of the third party payment mode may be the same institution as a manufacturer of the terminal.

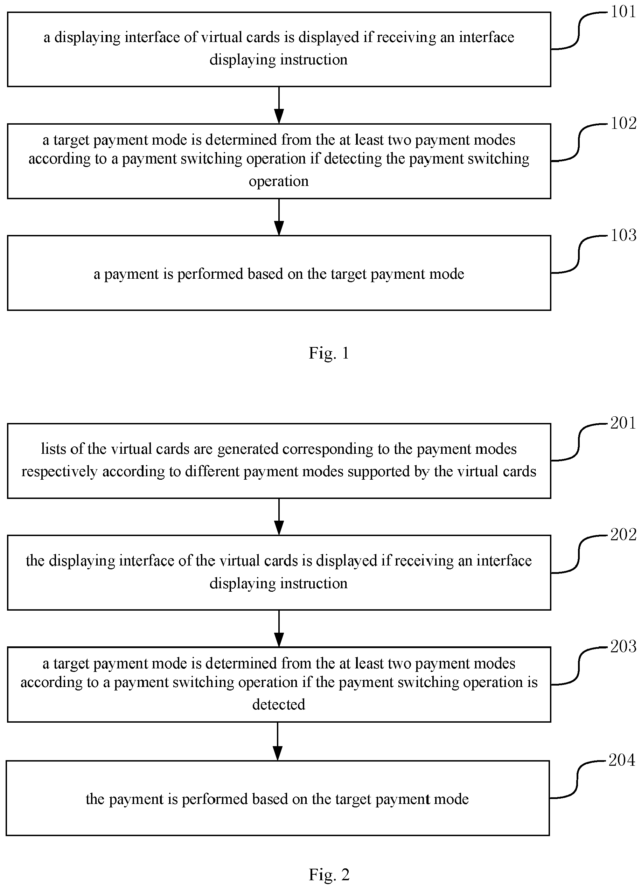

Fig. 1 is a flow chart showing a payment switching method according to an exemplary embodiment. As shown in Fig. 1, the payment switching method is applied in a terminal, and includes the following.

In block 101, a displaying interface of virtual cards is displayed if receiving an interface displaying instruction, in which the displaying interface of the virtual cards includes at least two payment modes.

The payment modes at least include a first payment mode and a second payment mode.

In block 102, a target payment mode is determined from the at least two payment modes according to a payment switching operation if detecting the payment switching operation.

In block 103, a payment is performed based on the target payment mode.

In a possible implementation, the interface displaying instruction is triggered if a designated operation on a hardware component of the first terminal is detected under a state that a screen of the first terminal is locked.

In a possible implementation, the interface displaying instruction is triggered if a device of a designated type is detected by a NFC module of the first terminal within a preset distance.

In a possible implementation, the interface displaying instruction is triggered if an operation for triggering a shortcut icon is detected, in which the shortcut icon is configured to activate the displaying interface of the virtual cards.

In a possible implementation, the designated operation on the hardware component of the first terminal includes at least one of:
a clicking operation, consecutively clicking operations or a long pressing operation on a preset physical button of the first terminal;
a preset operation on the screen of the first terminal; and
a preset operation on a fingerprint identifying module of the first terminal.

In a possible implementation, the displaying interface of the virtual cards includes a first list of the virtual cards supporting the first payment mode if the first payment mode is selected, and the virtual cards representing bank cards supporting the first payment mode.

In a possible implementation, the displaying interface of the virtual cards includes a second list of the virtual cards supporting the second payment mode if the second payment mode is selected, and the virtual cards representing account information supporting the second payment mode.

In a possible implementation, the payment switching operation is a swiping operation on the displaying interface of the virtual cards to the right or to the left; or
the payment switching operation is a triggering operation on any one of lists on the displaying interface of the virtual cards.

In a possible implementation, if the target payment mode is the second payment mode, performing the payment based on the target payment mode includes:
displaying a payment graphic logo if receiving a first payment instruction, scanning the payment graphic logo by a second terminal to finish the payment, in which the payment graphic logo is configured to indicate account information supporting the second payment mode; or scanning a receiving graphic logo and acquiring receiving account information to finish the payment according to account information supporting the second payment mode and the receiving account information; or reading payment account information from a designated storage region if receiving a second payment instruction and sending the payment account information to a second terminal by a NFC module of the first terminal to finish the payment, in which the payment account information is generated by a server according to account information supporting the second payment mode.

In a possible implementation, the method further includes:
generating lists of the virtual cards corresponding to the at least two payment modes respectively;
in which performing the payment based on the target payment mode includes:
   displaying a list of the virtual cards supporting the target payment mode and performing the payment according to the list.

All above alternative technical solutions may adopt any combinations to form alternative embodiments of the present disclosure, which is not elaborated herein.

Fig. 2 is a flow chart showing a payment switching method according to an exemplary embodiment. As shown in Fig. 2, the method is applied in a terminal. The method includes the following.

In block 201, lists of the virtual cards are generated corresponding to the payment modes, respectively, according to different payment modes supported by the virtual cards.

In embodiments of the present disclosure, a unique account corresponds to the terminal. The account may be an account of a payment application, and there may be a plurality of virtual cards associated with one account. In order to directly exhibit differences among the payment modes supported by the virtual cards if displaying the virtual cards, a list of the virtual cards may be generated corresponding to each payment mode respectively. The contents represented by the virtual cards in the lists of the virtual cards are different according to the different payment modes. For example, each virtual card in the first list of the virtual cards supporting the first payment mode represents a virtual bank card supporting the first payment mode; and each virtual card in the second list of the virtual cards supporting the second payment mode represents account information supporting the second payment mode.

In order to highlight the payment mode selected, the list of the virtual cards corresponding to the payment mode selected may be displayed in the playing interface of the virtual cards.

For example, the displaying interface of the virtual cards includes the first list of the virtual cards supporting the first payment mode if the first payment mode is selected, and each virtual card represents the virtual bank card supporting the first payment mode. The displaying interface of the virtual cards includes the second list of the virtual cards supporting the second payment mode if the second payment mode is selected, and each virtual card represents the account information supporting the second payment mode.

In order to further highlight the payment mode selected, an option corresponding to the payment mode selected may be displayed to be in a selected state, which may be highlighted. Particularly, the selected state may be opposite to an unselected state, for example, brightness of displaying the option of the selected state is higher than brightness of displaying the option of the unselected state.

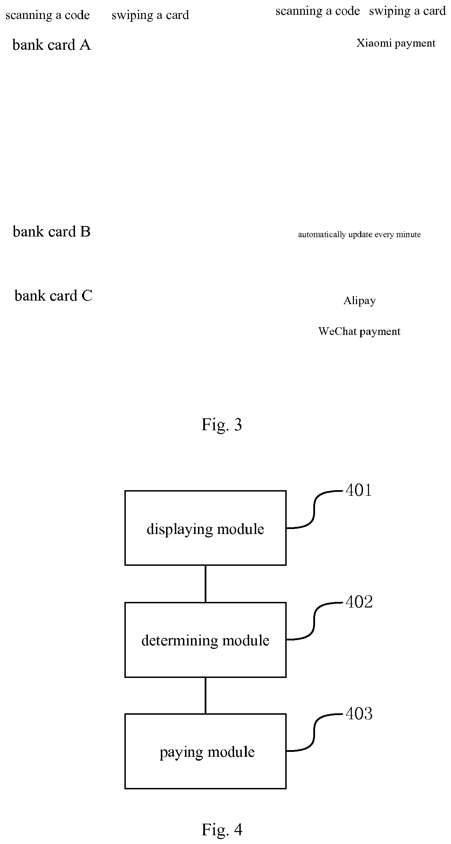

Fig. 3 is a schematic diagram illustrating a displaying interface of virtual cards. In Fig. 3, options "swiping cards" and "scanning codes" are included and the options correspond to lists of virtual cards respectively. The virtual cards corresponding to "swiping a card" support the flash-payment based on NFC and the virtual cards corresponding to "scanning a code" are account information supporting to the third party payment mode, if the first payment mode is selected, shown in a left figure in Fig. 3.

In any one of the lists of the virtual cards, a first virtual card or a first account added by a user is determined to be a defaulted card or a defaulted account of the payment mode. Particularly, the defaulted card or the defaulted account may be reset according to a subsequent adjustment, which is not limited in embodiments of the present disclosure.

In block 202, the displaying interface of the virtual cards is displayed if receiving an interface displaying instruction.

Triggering modes for triggering the interface displaying instruction include one of the following.

A first triggering mode, the interface displaying instruction is triggered if detecting a designated operation on a hardware component of the first terminal under a state that a screen of the first terminal is locked.

The designated operation on the hardware component of the first terminal includes at least one of the following. A clicking operation, consecutively clicking operations or a long pressing operation on a preset physical button of the first terminal is included, in which the preset physical button may be a physical button, for example, double clicks or a long press on a home physical button; and the preset physical button may also be one or more of a plurality of physical buttons designated, for example, simultaneously click on both of a power button and the home button twice. And/or, a preset operation on the screen of the first terminal is included, for example, consecutively clicking operations, a swiping operation and the like. And/or, a preset operation on a fingerprint identifying module of the first terminal is included, for example, double clicks on the fingerprint identifying module and the like.

It is to be illustrated that, the user may set a designated operation for activating the displaying interface of the virtual cards in the first terminal in advance such that the first terminal may fit usage habits of the user better.

With an interface activating mode corresponding to such triggering mode, by providing an operation access for rapidly switching the payment modes to the user, largely shortening an operating path is possible.

In addition, with the interface activating mode corresponding to such triggering mode, the displaying interface of the virtual cards may be activated by directly operating on the hardware component of the first terminal. Therefore, a quick access employed by the interface activating mode is connected with the hardware component of the first terminal directly, such that the hardware component may be illegal manipulated and be faced with other safety problems. Therefore, further, the payment application may be a native application on the system, or an application certified by a terminal manufacturer. Then, even if the payment application has controlling privileges on the hardware component, the safety may be ensured while convenience and efficiency is ensured.

A second triggering mode, the interface displaying instruction is triggered if a device of a designated type is detected by a NFC module of the first terminal within a preset distance.

The device of the designated type is a receiving terminal, such as a POS machine, a code scanner or the like.

The terminal may detect whether there is the device of the designated type within the preset distance via the NFC module on the terminal. The detection may be performed by detecting whether the terminal enters into a radio-frequency field of the device of the designated type, or by detecting whether there is the device of the designated type enters into the radio-frequency field of the terminal, which is not specifically limited in embodiments of the present disclosure.

For an implementation that it is detected whether the terminal enters into the radio-frequency field of the device of the designated type, the device of the designated type may be a main device in NFC communication to send a finding signal to surroundings. The terminal may find device information carried by the signal to determine whether the device is the device of the designated type if receiving the finding signal. The interface displaying instruction may be triggered if it is determined that the device is the device of the designated type. The device information may be model information of the device, type information of the device or the like.

For an implementation that it is detected whether there is the device of the designated type enters into the radio-frequency field of the terminal, the terminal may be a main device in NFC communication to send a finding signal to surroundings. Any device may feedback a response signal to the terminal if receiving the finding signal. The terminal may determine whether the device is the device of the designated type according to device information carried by the response signal. The interface displaying instruction may be triggered if it is determined that the device is the device of the designated type. The device information may be model information of the device, type information of the device or the like.

Certainly, the description of the above implementations are exemplary and not be construed to limit specific implementations. Furthermore, in addition to the above implementations, it is also determined whether there is the device of the designated type in the preset distance by detecting whether the NFC module receives a receiving instruction or a paying instruction, which is not limited in embodiments of the present disclosure.

In embodiments of the present disclosure, the interface displaying instruction is also triggered by other operations on the terminal by the user. For example, a shortcut icon is provided on an interface of the terminal, the shortcut icon is configured to activate the displaying interface of the virtual cards. The interface displaying instruction is triggered if it is detected a triggering operation (such as a clicking operation) on the shortcut icon, and then the displaying interface of the virtual cards is displayed in response to the interface displaying instruction. It may shorten the operation path significantly and realize a switching convenience and efficiency.

In block 203, a target payment mode is determined from the at least two payment modes according to a payment switching operation if the payment switching operation is detected.

The switching operation may be a swiping operation on the displaying interface of the virtual cards to the right or to the left. For example, taking a left figure in Fig. 3 as an example, it may be realized that the list of "swiping a card" is switched to the list of "scanning a code" if it is detected the swiping operation on the displaying interface of the virtual cards to the left. The payment mode corresponding to the switching operation is the third party payment mode corresponding to the list of "scanning a code".

The switching operation may also be a triggering operation on any one of lists on the displaying interface of the virtual cards. The triggering operation may be a clicking operation on an option corresponding to the list of the virtual cards. For example, the list of the virtual cards corresponding to the option is displayed if it is detected the clicking operation on the option "swiping a card".

Certainly, Fig. 3 is merely an example, the target payment mode is set to be a flash-payment mode based on NFC by the switching operation if the third party payment mode is selected, which is not limited in embodiments of the present disclosure.

Further, in each payment mode, the defaulted card or the default account may be set. For example, the defaulted card is switched from a virtual card 1 to a virtual card 2 via a card switching operation, or the defaulted account is switched from an account 1 to an account 2 via an account switching operation. It is to be illustrated that, for the third party payment mode, a plurality of third party payment modes (such as Alipay, Xiaomi payment, WeChat payment and the like) may be bound to one terminal.

In block 204, the payment is performed based on the target payment mode.

The block 204 may include: displaying the list of the virtual cards supporting the target payment mode and performing the payment based on the list of the virtual cards supporting the target payment mode. The user may select any virtual card from the displayed list of the virtual cards supporting the target payment mode and may perform the payment based on the virtual card selected.

For a first payment mode, the receiving terminal may perform an interaction with the background to finish the payment. Operations based on the target payment mode include scanning codes actively, scanning code passively and induction payment based on NFC if the target payment mode is the second payment mode. Implementations corresponding to operations will be described below.

With a first implementation, the payment graphic logo is displayed if the first payment instruction is received, and the payment graphic logo is scanned by a second terminal to finish the payment, in which the payment graphic logo is configured to indicate account information supporting the second payment mode.

The first payment instruction is configured to indicate that the payment is performed by displaying the payment graphic logo.

Actually, the first implementation is an operation that the payment graphic logo is displayed by the paying terminal, then the payment graphic logo is scanned by the receiving terminal to acquire the account information of the paying terminal, such that the receiving terminal may perform an interaction with a third party payment platform to finish the payment from the paying terminal to the receiving terminal by using the account information of the paying terminal.

The terminal may perform the payment in virtue of a bank card bound with the third party payment mode or in virtue of an account balance. The server may encrypt the account information and the payment mode to generate a cluster of payment graphic logos which represent account information of the user of the terminal. The cluster of payment graphic logos may be generated in advance and be stored to generate a list of the payment graphic logos. The server may send the list of the payment graphic logos to the terminal. Then, the terminal may read the payment graphic logo from the list of the payment graphic logos in random every time when the terminal performs the payment. If it needs to be in secrecy, a payment password may be set such that the terminal performs the payment with the password after scanning the payment graphic logos. In order to simplify the payment process, the payment may be directly performed without the password if paid money is relatively low.

With a second implementation, a receiving graphic logo is scanned and receiving account information is acquired to finish the payment according to account information supporting the second payment mode and the receiving account information.

Actually, the second implementation is an operation that the paying terminal scans the receiving graphic logo provided by the receiving terminal to acquire the account information of the receiving terminal such that the paying terminal may perform an interaction with the third party payment platform to finish the payment from the paying terminal to the receiving terminal by using the account information of the receiving terminal. Further, an amount paid may be carried in the receiving graphic logo or be input manually.

With a third implementation, the payment account information is read from a designated storage region if the second payment instruction is received and the payment account information is sent to the receiving terminal by a NFC module of the first terminal to finish the payment, in which the payment account information is generated by a server according to account information supporting the second payment mode.

The second payment instruction is for indicating to perform the payment via the NFC module. Actually, the third implementation is an operation that the paying terminal sends the account information to the receiving terminal via the NFC module and then the receiving terminal decrypts the account information to acquire the account information of the paying terminal such that the receiving terminal may perform an interaction with the third party payment platform to finish the payment from the paying terminal to the receiving terminal by using the account information of the paying terminal. This payment process may be seen as an induction payment process by the NFC module.

The server may encrypt the account information and the payment mode of the user of the terminal to generate a cluster of pieces of payment account information which represents the account information of the terminal. For one piece of account information of the user of the terminal, a plurality of pieces of payment account information may be generated in advance, then the plurality of pieces of the payment account information are stored to be a list of the payment account information. The list of the payment account information is sent by the server to the terminal such that the terminal may acquire the piece of the payment account information in random from the list of the payment account information every time when performing the payment. The induction payment process is similar to the process of graphic logo scanning, except an intermediation. Particularly, for a case that the terminal adds the plurality of pieces of account information, generating and sending the list may be performed for each of the plurality of pieces of account information.

The graphic logo referred above may be a two-dimensional code, a bar code or other graphic logos representing corresponding information, which in not limited in embodiments of the present disclosure.

It is to be illustrated that, the first list of the virtual cards corresponding to the first payment mode (such as a list of bank cards based on NFC flash-payment) may be displayed as default if the displaying interface of virtual cards is activated at a first time. After the user switches the payment mode to finish the payment, the second list of the virtual cards corresponding to the second payment mode is displayed as default if the displaying interface of virtual cards is activated again.

In embodiments of the present disclosure, by providing the displaying interface of the virtual cards, an operation access for rapidly switching the payment modes is provided for a user, thereby largely shortening the operating path.

In addition, since the displaying interface of the virtual cards may be activated by directly operating on the hardware component of the first terminal, a quick access employed by the interface activating mode is connected with the hardware component of the first terminal directly, such that the hardware component may be illegal manipulated and be faced with other safety problems. Therefore, further, the payment application may be a native application on the system, or an application certified by a terminal manufacturer. Then, even if the payment application has controlling privileges on the hardware component, the safety may be ensured while convenience and efficiency is ensured.

Fig. 4 is a block diagram of a payment switching device according to an exemplary embodiment. Referring to Fig. 4, the device includes: a displaying module 401, a determining module 402 and a paying module 403.

The displaying module 401 is configured to display a displaying interface of virtual cards if receiving an interface displaying instruction by a first terminal, in which the displaying interface of the virtual cards includes at least two payment modes.

The determining module 402 is configured to determine a target payment mode from the at least two payment modes according to a payment switching operation if detecting the payment switching operation.

The paying module 403 is configured to perform a payment based on the target payment mode.

In a possible implementation, the device further includes a first triggering module, configured to trigger the interface displaying instruction if detecting a designated operation on a hardware component of the first terminal under a state that a screen of the first terminal is locked.

In a possible implementation, the device further includes a second triggering module, configured to trigger the interface displaying instruction if detecting a device of a designated type by a NFC module of the first terminal within a preset distance.

In a possible implementation, the device further includes a third triggering module, configured to trigger the interface displaying instruction if detecting an operation for triggering a shortcut icon, in which the shortcut icon is configured to activate the displaying interface of the virtual cards.

In a possible implementation, the designated operation on the hardware component of a first terminal includes at least one of: a clicking operation, consecutively clicking operations or a long pressing operation on a preset physical button of the first terminal; a preset operation on the screen of the first terminal; and a preset operation on a fingerprint identifying module of the first terminal.

In a possible implementation, the displaying interface of the virtual cards includes a first list of the virtual cards supporting a first payment mode if selecting the first payment mode, and the virtual cards representing bank cards supporting the first payment mode.

In a possible implementation, the displaying interface of the virtual cards includes a second list of the virtual cards supporting a second payment mode if selecting the second payment mode, and the virtual cards represent account information supporting the second payment mode.

In a possible implementation, the payment switching operation is a swiping operation on the displaying interface of the virtual cards to the right or to the left; or
the payment switching operation is a triggering operation on any one of lists on the displaying interface of the virtual cards.

In a possible implementation, the paying module is configured to:
display a payment graphic logo if receiving a first payment instruction, scan the payment graphic logo by a second terminal to finish the payment, in which the payment graphic logo is configured to indicate account information supporting the second payment mode; or scan a receiving graphic logo and acquire receiving account information to finish the payment according to account information supporting the second payment mode and the receiving account information; or read payment account information from a designated storage region if receiving a second payment instruction and send the payment account information to a second terminal by a NFC module of the first terminal to finish the payment, in which the payment account information is generated by a server according to account information supporting the second payment mode.

In a possible implementation, the device further includes:
a list generating module, configured to generate lists of the virtual cards corresponding to the at least two payment modes respectively;
in which the paying module is further configured to display a list of the virtual cards supporting the target payment mode and to perform the payment according to the list.

With respect to the devices in the above embodiments, the specific manners for performing operations for individual modules therein have been described in detail in the embodiments regarding the methods, which are not elaborated herein again.

It is to be illustrated that: when the payment switching device provided in embodiments switches the payment mode, only a division of the above functionality modules is taken as an example. In actually, the above functionality may be completed by different functionality modules as needed, that is, an inner structure in the device is divided into different functionality modules to finish the above all or parts of the functionality. Furthermore, the payment switching device provided in embodiments is same to embodiments of the payment switching method, and the specific implementations may refer to the method embodiments, which are not elaborated herein.

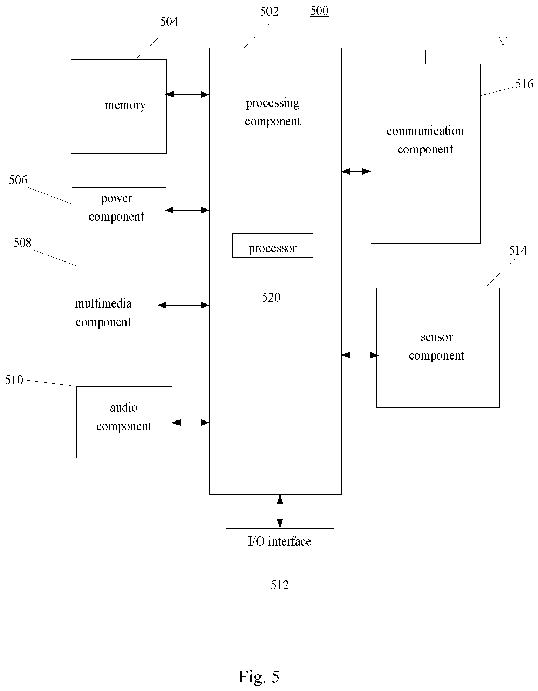

Fig. 5 is a block diagram of a device 500 for switching a payment mode according to an exemplary embodiment. For example, the device 500 may be a mobile phone, a computer, a digital broadcasting terminal, a messaging device, a game console, a tablet device, a medical device, fitness equipment, a Personal Digital Assistant PDA, or the like.

Referring to Fig. 5, the device 500 may include on ore more of the following components: a processing component 502, a memory 504, a power component 506, a multimedia component 508, an audio component 510, an Input/Output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 520 to execute instructions to perform all or part of the acts in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the device 500. Examples of such data include instructions for any applications or methods operated on the device 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the device 500. The power component 506 may include a power management system, one or more power sources, and any other components associated with the generation, management, and distribution of power in the device 500.

The multimedia component 508 includes a screen providing an output interface between the device 500 and the user. In some embodiments, the screen may include a liquid crystal display (LCD) and a press panel (TP). If the screen includes the press panel, the screen may be implemented as a press screen to receive input signals from the user. The press panel includes one or more press sensors to sense presses, swipes, and other gestures on the press panel. The press sensors may not only sense a boundary of a press or swipe action, but also sense a duration time and a pressure associated with the press or swipe action. In some embodiments, the multimedia component 508 includes a front camera and/or a rear camera. The front camera and/or the rear camera may receive external multimedia data while the device 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone (MIC) configured to receive an external audio signal when the device 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface for the processing component 502 and peripheral interface modules, such as a keyboard, a click wheel, buttons, and the like. The buttons may include, but are not limited to, a home button, a volume button, a starting button, and/or a locking button.

The sensor component 514 includes one or more sensors to provide status assessments of various aspects of the device 500. For instance, the sensor component 514 may detect an open/closed status of the device 500 and relative positioning of components (e.g. the display and the keypad of the device 500). The sensor component 514 may also detect a change in position of the device 500 or of a component in the device 500, a presence or absence of user contact with the device 500, an orientation or an acceleration/deceleration of the device 500, and a change in temperature of the device 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate wired or wireless communication between the device 500 and other devices. The device 500 can access a wireless network based on a communication standard, such as WIFI, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and/or other technologies.

In exemplary embodiments, the device 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as the memory 504 including instructions. The above instructions are executable by the processor 520 in the device 500, for performing the above-described methods. For example, the non-transitory computer-readable storage medium may be a ROM, a RAM, a CD-ROM, a magnetic tape, a floppy disc, an optical data storage device, or the like.

In exemplary embodiments, there is also provided a non-transitory computer readable storage medium. A mobile terminal performs the above payment switching method provided by embodiments shown in Fig. 1 or Fig.2, if the instruction in the storage medium is executed by the processor in the mobile terminal.

Other embodiments of the disclosure will be apparent to those skilled in the art from consideration of the specification and practice of the disclosure disclosed herein. This application is intended to cover any variations, uses, or adaptations of the disclosure following the general principles thereof and including such departures from the present disclosure as come within known or customary practice in the art.

## Claims

1. A payment switching method, comprising:
displaying (101; 202) a displaying interface of virtual cards if receiving an interface displaying instruction by a first terminal, wherein the displaying interface of the virtual cards comprises at least two payment modes;
determining (102; 203) a target payment mode from the at least two payment modes according to a payment switching operation if detecting the payment switching operation; and
performing (103; 204) a payment based on the target payment mode.

2. The method according to claim 1, further comprising:
triggering the interface displaying instruction if detecting a designated operation on a hardware component of the first terminal under a state that a screen of the first terminal is locked; or
triggering the interface displaying instruction if detecting a device of a designated type by a NFC module of the first terminal within a preset distance; or
triggering the interface displaying instruction if detecting an operation for triggering a shortcut icon, wherein the shortcut icon is configured to activate the displaying interface of the virtual cards.

3. The method according to claim 2, wherein the designated operation on the hardware component of the first terminal comprises at least one of:
a clicking operation, consecutively clicking operations or a long pressing operation on a preset physical button of the first terminal;
a preset operation on a screen of the first terminal; and
a preset operation on a fingerprint identifying module of the first terminal.

4. The method according to any one of claims 1 to 3, wherein the displaying interface of the virtual cards comprises a first list of the virtual cards supporting a first payment mode if selecting the first payment mode, and the virtual cards representing bank cards supporting the first payment mode; or
wherein the displaying interface of the virtual cards comprises a second list of the virtual cards supporting a second payment mode if selecting the second payment mode, and the virtual cards representing account information supporting the second payment mode.

5. The method according to any one of claims 1 to 4, wherein the payment switching operation is a swiping operation on the displaying interface of the virtual cards to the right or to the left; or
wherein the payment switching operation is a triggering operation on any one of lists on the displaying interface of the virtual cards.

6. The method according to claim 4, wherein, if the target payment mode is the second payment mode, performing (103; 204) a payment based on the target payment mode comprises:
displaying a payment graphic logo if receiving a first payment instruction, scanning the payment graphic logo by a second terminal to finish the payment, wherein the payment graphic logo is configured to indicate account information supporting the second payment mode; or
scanning a receiving graphic logo and acquiring receiving account information to finish the payment according to account information supporting the second payment mode and the receiving account information; or
reading payment account information from a designated storage region if receiving a second payment instruction and sending the payment account information to a second terminal by a NFC module of the first terminal to finish the payment, wherein the payment account information is generated by a server according to account information supporting the second payment mode.

7. The method according to any one of claims 1 to 6, further comprising:
generating lists of the virtual cards corresponding to the at least two payment modes respectively;
wherein performing (103; 204) a payment based on the target payment mode comprises:
displaying a list of the virtual cards supporting the target payment mode and performing the payment according to the list.

8. A payment switching device, comprising:
a displaying module (401), configured to display a displaying interface of virtual cards if receiving an interface displaying instruction by a first terminal, wherein the displaying interface of the virtual cards comprises at least two payment modes;
a determining module (402), configured to determine a target payment mode from the at least two payment modes according to a payment switching operation if detecting the payment switching operation; and
a paying module (403), configured to perform a payment based on the target payment mode.

9. The device according to claim 8, further comprising:
a first triggering module, configured to trigger the interface displaying instruction if detecting a designated operation on a hardware component of the first terminal under a state that a screen of the first terminal is locked; or
a second triggering module, configured to trigger the interface displaying instruction if detecting a device of a designated type by a NFC module of the first terminal within a preset distance; or
a third triggering module, configured to trigger the interface displaying instruction if detecting an operation for triggering a shortcut icon, wherein the shortcut icon is configured to activate the displaying interface of the virtual cards.

10. The device according to claim 9, wherein the designated operation on the hardware component of the first terminal comprises at least one of:
a clicking operation, consecutive clicking operations or a long pressing operation on a preset physical button of the first terminal; a preset operation on the screen of the first terminal; and a preset operation on a fingerprint identifying module of the first terminal.

11. The device according to any one of claims 8 to 10, wherein the displaying interface of the virtual cards comprises a first list of the virtual cards supporting a first payment mode if selecting the first payment mode, and the virtual cards representing bank cards supporting the first payment mode; or
wherein the displaying interface of the virtual cards comprises a second list of the virtual cards supporting a second payment mode if selecting the second payment mode, and the virtual cards representing account information supporting the second payment mode.

12. The device according to any one of claims 8 to 11, wherein the payment switching operation is a swiping operation on the displaying interface of the virtual cards to the right or to the left; or
wherein the payment switching operation is a triggering operation on any one of lists on the displaying interface of the virtual cards.

13. The device according to claim 11, wherein the paying module (403) is configured to:
display a payment graphic logo if receiving a first payment instruction, scan the payment graphic logo by a second terminal to finish the payment, wherein the payment graphic logo is configured to indicate account information supporting the second payment mode; or
scan a receiving graphic logo and acquire receiving account information to finish the payment according to account information supporting the second payment mode and the receiving account information; or
read payment account information from a designated storage region if receiving a second payment instruction and send the payment account information to a second terminal by a NFC module of the first terminal to finish the payment, wherein the payment account information is generated by a server according to account information supporting the second payment mode.

14. The device according to any one of claims 8 to 13, further comprising:
a list generating module, configured to generate lists of the virtual cards corresponding to the at least two payment modes respectively;
wherein the paying module (403) is further configured to display a list of the virtual cards supporting the target payment mode and to perform the payment according to the list.

15. A computer-readable storage medium having stored therein instructions that, when executed by a processor of a device, causes the device to perform the payment switching method according to any one of claims 1 to 7.
